# EUROPEAN PATENT APPLICATION

(11) **EP 4 133 948 A1**
(43) Date of publication of application: **15.02.2023**
(21) Application number: 21191233.2
(22) Date of filing: 13.08.2021
(51) Int. Cl.: A23L 2/54, A47J 31/00, A47J 31/44

(54) **SUB-MACHINE OF SODA FOUNTAIN WITH ADJUSTABLE EXHAUST VELOCITY**

(71) Applicant: Guan, Jin Ye, Cui Shan Hu New District Kaiping City Guangdong Province (CN)
(72) Inventor: Guan, Jin Ye, Cui Shan Hu New District Kaiping City Guangdong Province (CN)
(74) Representative: Sánchez Margareto, Carolina

(57) **Abstract**

A sub-machine of a soda fountain with an adjustable exhaust velocity includes a main body, a water bottle connector, a housing, a taper ring, a bottom cover, a positioning seat, an air inlet assembly, an air nozzle rod, an exhaust valve and a soda bottle, and further includes a connecting seat, an exhaust knob and an exhaust key, where the connecting seat covers an upper opening of an exhaust valve cavity, an upper end of a valve rod passes through a guide hole of the connecting seat and is pivoted to the exhaust key, and a lower surface of the exhaust key is attached to a flat seat plate part; a circular body part of the connecting seat extends into an arc-shaped part, the exhaust key is nested into an exhaust key cavity, and a handle part extends out from a guide notch; the exhaust key is in sliding fit with an inclined surface part, and a sliding driving plate part is in sliding fit with a spiral guide surface part. Due to this structure, the handle part is operated to rotate the exhaust knob, so as to perform exhaust and adjust the exhaust velocity.

## Description

### TECHNICAL FIELD

The present disclosure relates to a soda fountain, and in particular, to a sub-machine of a soda fountain.

### BACKGROUD

At present, in the prior art, a sub-machine of a soda fountain with an adjustable exhaust velocity includes a main body, a water bottle connector, a housing, a taper ring, a bottom cover, a positioning seat, an air inlet assembly, an air nozzle rod, an exhaust valve and a soda bottle, where the exhaust valve includes an exhaust valve cavity provided on the main body, an annular seat body, a sealing member, a sealing gasket, an exhaust valve body, a valve rod, a sealing gasket seat arranged at a lower end of the valve rod, a pressure spring and a nut, and an air guide hole in the exhaust valve cavity is communicated with an inner cavity of the taper ring; a sealing ring is arranged in the annular seat body, the annular seat body is connected to a lower end of the exhaust valve body, the nut is screwed to the exhaust valve body, the valve rod passes through a top plate of the nut and extends out, the pressure spring is matched with the sealing gasket seat and the top plate of the nut, and the sealing gasket on the sealing gasket seat is matched with an exhaust hole at the bottom of the exhaust valve body; and the annular seat body is arranged at the bottom of the exhaust valve cavity. The sub-machine has the following problems: during exhaust, the valve rod needs to be lifted by hand to implement exhaust, the exhaust velocity cannot be controlled, and the sub-machine is inconvenient to use.

### SUMMARY

An objective of the present disclosure is to provide a sub-machine of a soda fountain with an adjustable exhaust velocity, which features convenience in exhaust and adjustable exhaust velocity.

The present disclosure is implemented in this way: a sub-machine of a soda fountain with an adjustable exhaust velocity, including a main body, a water bottle connector, a housing, a taper ring, a bottom cover, a positioning seat, an air inlet assembly, an air nozzle rod, an exhaust valve and a soda bottle, where the exhaust valve includes an exhaust valve cavity provided on the main body, an annular seat body, a sealing member, a sealing gasket, an exhaust valve body, a valve rod, a sealing gasket seat arranged at a lower end of the valve rod, a pressure spring and a nut, and an air guide hole in the exhaust valve cavity is communicated with an inner cavity of the taper ring; a sealing ring is arranged in the annular seat body, the annular seat body is connected to a lower end of the exhaust valve body, the nut is screwed to the exhaust valve body, the valve rod passes through a top plate of the nut and extends out, the pressure spring is matched with the sealing gasket seat and the top plate of the nut, and the sealing gasket on the sealing gasket seat is matched with an exhaust hole at the bottom of the exhaust valve body; the annular seat body is arranged at the bottom of the exhaust valve cavity, where the sub-machine further includes a connecting seat, an exhaust knob and an exhaust key,
the connecting seat includes a circular body part, a guide hole along an axis of the circular body part, a flat seat plate part arranged at the top of the circular body part, an inclined surface part located on a clockwise side of the flat seat plate part and a spiral guide surface part, and the guide hole passes through a center of the flat seat plate part;
the exhaust knob includes a handle part, an arc-shaped part with a lower opening and a side opening, an exhaust key cavity connected to the arc-shaped part, and a sliding driving plate part arranged at a lower end of a wallboard of a fixed cavity; the circular body part is inserted into the arc-shaped part, and the exhaust key is fixedly connected to the fixed cavity,
a circumferential wallboard of the positioning seat is provided with a guide notch; and
the connecting seat covers an upper opening of an exhaust valve cavity, an upper end of the valve rod passes through a guide hole of the connecting seat and is pivoted to the exhaust key, and a lower surface of the exhaust key is attached to the flat seat plate part; the circular body part of the connecting seat extends into the arc-shaped part, the exhaust key is nested into the exhaust key cavity, and the handle part extends out from a guide notch; the exhaust key is in sliding fit with the inclined surface part, and the sliding driving plate part is in sliding fit with the spiral guide surface part.

In the sub-machine of a soda fountain with an adjustable exhaust velocity, a part of the valve rod pivoted to the exhaust key is a square pivoted part, the exhaust key is provided with a square hole in a height direction, a gap is formed between the square pivoted part and the square hole, and the square pivoted part is pivoted to the exhaust key through a fixed shaft.

In the sub-machine of a soda fountain with an adjustable exhaust velocity, the sealing ring is provided with an exhaust nozzle; and
the exhaust nozzle passes through a through hole in a bottom plate of the annular seat body and is inserted into an air guide hole in a bottom plate of the exhaust valve cavity.

The sub-machine of a soda fountain with an adjustable exhaust velocity further includes a second pressure spring, where
the exhaust valve body is provided with an annular baffle, and an upper end of the annular seat body is matched with the annular baffle; the exhaust valve cavity is provided with a radial exhaust hole;
the second pressure spring sleeves the exhaust valve body, a lower end of the second pressure spring is matched with the annular baffle, and an upper end thereof is matched with the connecting seat; and
a lower end of the exhaust nozzle is arranged on an inverted truncated cone-shaped part, and the inverted truncated cone-shaped part is inserted into an upper end of the air guide hole of the exhaust valve cavity.

In the sub-machine of a soda fountain with an adjustable exhaust velocity according to the present disclosure, due to this structure, the handle part is operated to rotate the exhaust knob, so as to perform exhaust and adjust the exhaust velocity.

### BRIEF DESCRIPTION OF THE DRAWINGS

FIG. 1 is a 3D view of the present disclosure;

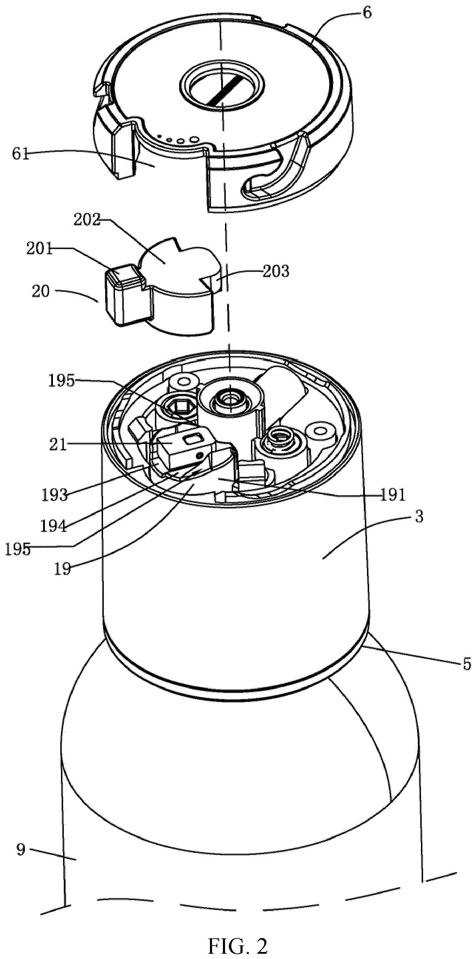

FIG. 2 is a first 3D exploded view of the present disclosure;

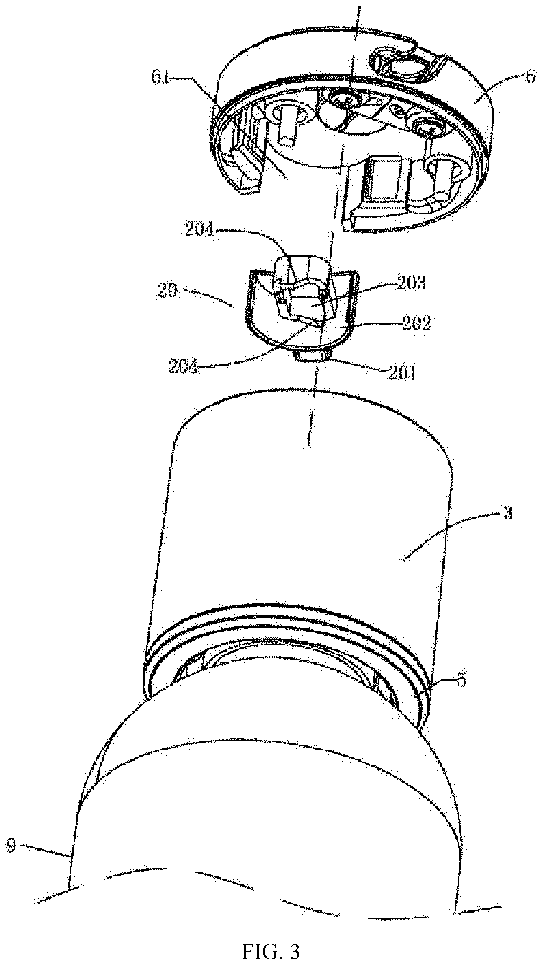

FIG. 3 is a second 3D exploded view of the present disclosure; and
FIG. 4 is a 3D view of the present disclosure.

### DESCRIPTION OF THE EMBODIMENTS

The present disclosure will be further described below in conjunction with the accompanying drawings.

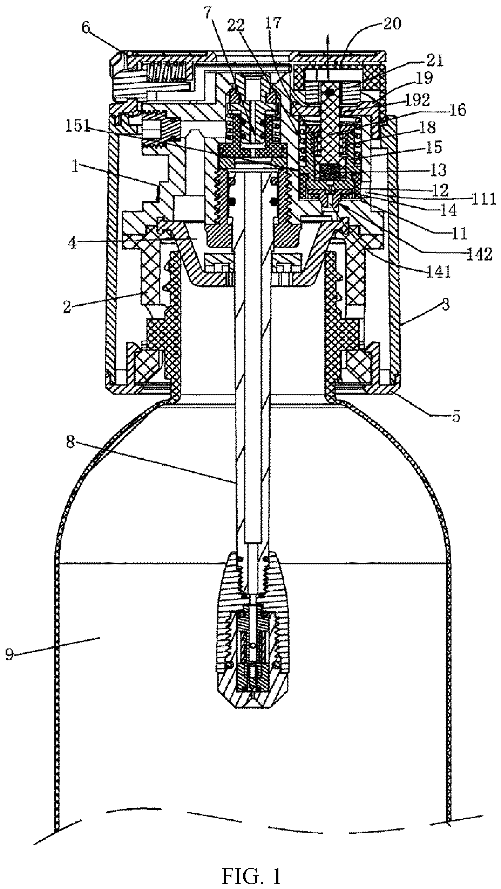

As shown in FIG. 1, a sub-machine of a soda fountain with an adjustable exhaust velocity includes a main body 1, a water bottle connector 2, a housing 3, a taper ring 4, a bottom cover 5, a positioning seat 6, an air inlet assembly 7, an air nozzle rod 8, an exhaust valve and a soda bottle 9, where the main body 1 is arranged on the water bottle connector 2, an outer turnup of the taper ring 4 is arranged between the main body 1 and the water bottle connector, the air inlet assembly 7 is arranged on the main body 1, the positioning seat 6 is arranged at the top of the main body 1, and a bottle opening of the soda bottle 9 is detachably connected to the water bottle connector; the exhaust valve includes an exhaust valve cavity 11 provided on the main body 1, an annular seat body 12, a sealing gasket 13, a sealing ring 14, an exhaust valve body 15, a valve rod 16, a sealing gasket seat arranged at a lower end of the valve rod 16, a pressure spring 17 and a nut 18, and an air guide hole in the exhaust valve cavity 11 is communicated with an inner cavity of the taper ring 4; the sealing ring 14 is arranged in the annular seat body 12, the annular seat body 12 is connected to a lower end of the exhaust valve body 15, the nut 18 is screwed to the exhaust valve body 15, the valve rod 16 passes through a top plate of the nut 18 and extends out, the pressure spring 17 is matched with the sealing gasket seat and the top plate of the nut 18, and the sealing gasket 13 on the sealing gasket seat is matched with an exhaust hole at the bottom of the exhaust valve body 15; and the annular seat body 12 is arranged at the bottom of the exhaust valve cavity 11.

The sub-machine of a soda fountain with an adjustable exhaust velocity further includes a connecting seat 19, an exhaust knob 20 and an exhaust key 21,
the connecting seat 19 includes a circular body part 191, a guide hole 192 along an axis of the circular body part, a flat seat plate part 193 arranged at the top of the circular body part, an inclined surface part 194 located on a clockwise side of the flat seat plate part and a spiral guide surface part 195, and the guide hole 192 passes through a center of the flat seat plate part 193;
the exhaust knob 20 includes a handle part 201, an arc-shaped part 202 with a lower opening and a side opening, an exhaust key cavity 203 connected to the arc-shaped part, and a sliding driving plate part 204 arranged at a lower end of a wallboard of a fixed cavity; the circular body part 191 is inserted into the arc-shaped part 202, and the exhaust key 21 is fixedly connected to the fixed cavity,
a circumferential wallboard of the positioning seat 6 is provided with a guide notch 61; and
the connecting seat 19 covers an upper opening of an exhaust valve cavity 11, an upper end of the valve rod 16 passes through a guide hole 192 of the connecting seat 19 and is pivoted to the exhaust key 21, and a lower surface of the exhaust key 21 is attached to the flat seat plate part 193; the circular body part 191 of the connecting seat 19 extends into the arc-shaped part 202, the exhaust key 21 is nested into the exhaust key cavity 203, and the handle part 201 extends out from a guide notch 60; the exhaust key 21 is in sliding fit with the inclined surface part 194, and the sliding driving plate part 204 is in sliding fit with the spiral guide surface part 195.

A part of the valve rod 16 pivoted to the exhaust key 21 is a square pivoted part, the exhaust key 21 is provided with a square hole in a height direction, a gap is formed between the square pivoted part and the square hole, and the square pivoted part is pivoted to the exhaust key 21 through a fixed shaft.

The sealing ring 14 is provided with an exhaust nozzle 141; and
the exhaust nozzle 141 passes through a through hole in a bottom plate of the annular seat body 12 and is inserted into an air guide hole in a bottom plate of the exhaust valve cavity 11.

The sub-machine of a soda fountain with an adjustable exhaust velocity further includes a second pressure spring 22, where
the exhaust valve body 15 is provided with an annular baffle 151, and an upper end of the annular seat body 12 is matched with the annular baffle 151; the exhaust valve cavity 11 is provided with a radial exhaust hole 111;
the second pressure spring 22 sleeves the exhaust valve body 15, a lower end of the second pressure spring 22 is matched with the annular baffle 151, and an upper end thereof is matched with the connecting seat 19; the annular baffle 151 is in sliding fit with the exhaust valve cavity 11,
a lower end of the exhaust nozzle 141 is arranged on an inverted truncated cone-shaped part 142, and the inverted truncated cone-shaped part 142 is inserted into an upper end of the air guide hole of the exhaust valve cavity 11.

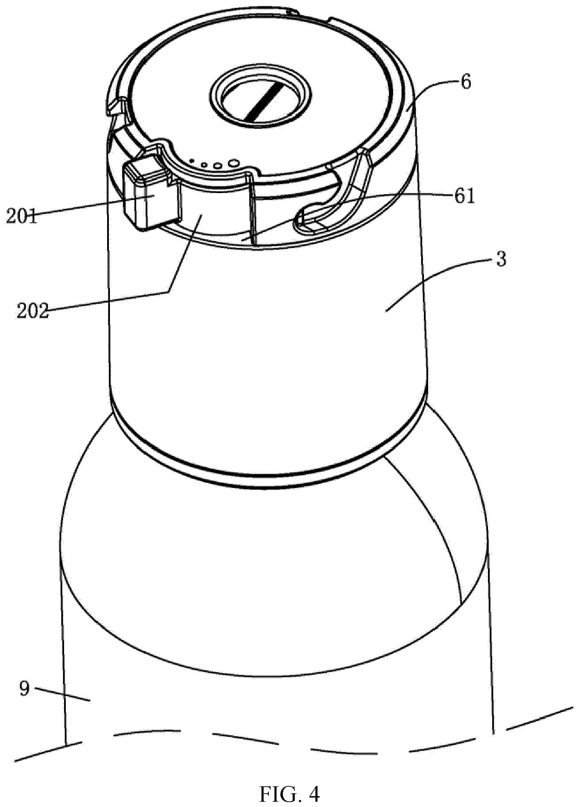

As shown in FIG. 1 and FIG. 4, the exhaust valve is in a closed state; in the state shown in FIG. 4, the exhaust knob 20 is rotated anticlockwise, the sliding driving plate part 204 slides along the spiral guide surface part 195 and gradually rises, and the exhaust key 21 and the valve rod 16 rotate and move upward, as shown in the direction of the solid arrow in FIG. 1; the sealing gasket seat at the lower end of the valve rod 16 compresses the pressure spring 17, and the sealing gasket 13 leaves a bottom plate of the exhaust valve body 15; a gas in the soda bottle 9 enters the exhaust valve body 15 through the taper ring 4, the air guide hole in the exhaust valve cavity 11 and the exhaust nozzle 141 on the sealing ring 14 and is discharged through a gap between the valve rod 16 and a valve rod channel on the nut 18. The exhaust knob 20 rotates in different phases, so that a gap between the sealing gasket 13 and the exhaust valve body 15 is different to achieve different exhaust volumes; the exhaust knob 20 continues to rotate, the annular baffle 151 compresses the second pressure spring 22, and the gap between the inverted truncated cone-shaped part 142 and the air guide hole gradually increases.

In FIG. 4, the exhaust knob 20 is rotated anticlockwise, and the exhaust volume, i.e., the exhaust velocity, gradually increases.

The above are only preferred implementations of the present disclosure. It should be noted that for those of ordinary skill in the art, several improvements and modifications may be made without departing from the principle of the present disclosure, and are also regarded as falling within the protection scope of the present disclosure.

## Claims

1. A sub-machine of a soda fountain with an adjustable exhaust velocity, comprising a main body, a water bottle connector, a housing, a taper ring, a bottom cover, a positioning seat, an air inlet assembly, an air nozzle rod, an exhaust valve and a soda bottle, wherein the exhaust valve comprises an exhaust valve cavity provided on the main body, an annular seat body, a sealing member, a sealing gasket, an exhaust valve body, a valve rod, a sealing gasket seat arranged at a lower end of the valve rod, a pressure spring and a nut, and an air guide hole in the exhaust valve cavity is communicated with an inner cavity of the taper ring; a sealing ring is arranged in the annular seat body, the annular seat body is connected to a lower end of the exhaust valve body, the nut is screwed to the exhaust valve body, the valve rod passes through a top plate of the nut and extends out, the pressure spring is matched with the sealing gasket seat and the top plate of the nut, and the sealing gasket on the sealing gasket seat is matched with an exhaust hole at the bottom of the exhaust valve body; the annular seat body is arranged at the bottom of the exhaust valve cavity, wherein the sub-machine further comprises a connecting seat, an exhaust knob and an exhaust key,
the connecting seat comprises a circular body part, a guide hole along an axis of the circular body part, a flat seat plate part arranged at the top of the circular body part, an inclined surface part located on a clockwise side of the flat seat plate part and a spiral guide surface part, and the guide hole passes through a center of the flat seat plate part;
the exhaust knob comprises a handle part, an arc-shaped part with a lower opening and a side opening, an exhaust key cavity connected to the arc-shaped part, and a sliding driving plate part arranged at a lower end of a wallboard of a fixed cavity; the circular body part is inserted into the arc-shaped part, and the exhaust key is fixedly connected to the fixed cavity,
a circumferential wallboard of the positioning seat is provided with a guide notch; and
the connecting seat covers an upper opening of an exhaust valve cavity, an upper end of the valve rod passes through a guide hole of the connecting seat and is pivoted to the exhaust key, and a lower surface of the exhaust key is attached to the flat seat plate part; the circular body part of the connecting seat extends into the arc-shaped part, the exhaust key is nested into the exhaust key cavity, and the handle part extends out from a guide notch; the exhaust key is in sliding fit with the inclined surface part, and the sliding driving plate part is in sliding fit with the spiral guide surface part.

2. The sub-machine of a soda fountain with an adjustable exhaust velocity according to claim 1, wherein a part of the valve rod pivoted to the exhaust key is a square pivoted part, the exhaust key is provided with a square hole in a height direction, a gap is formed between the square pivoted part and the square hole, and the square pivoted part is pivoted to the exhaust key through a fixed shaft.

3. The sub-machine of a soda fountain with an adjustable exhaust velocity according to claim 1, wherein the sealing ring is provided with an exhaust nozzle; and
the exhaust nozzle passes through a through hole in a bottom plate of the annular seat body and is inserted into an air guide hole in a bottom plate of the exhaust valve cavity.

4. The sub-machine of a soda fountain with an adjustable exhaust velocity according to claim 3, further comprising a second pressure spring, wherein
the exhaust valve body is provided with an annular baffle, and an upper end of the annular seat body is matched with the annular baffle; the exhaust valve cavity is provided with a radial exhaust hole;
the second pressure spring sleeves the exhaust valve body, a lower end of the second pressure spring is matched with the annular baffle, and an upper end thereof is matched with the connecting seat; and
a lower end of the exhaust nozzle is arranged on an inverted truncated cone-shaped part, and the inverted truncated cone-shaped part is inserted into an upper end of the air guide hole of the exhaust valve cavity.
